# EUROPEAN PATENT SPECIFICATION

(11) **EP 0 690 752 B1**
(45) Date of publication and mention of the grant of the patent: **07.01.1998**
(21) Application number: 94911728.7
(22) Date of filing: 28.03.1994
(51) Int. Cl.: B09B 3/00, C02F 3/34, A62D 3/00

(54) **PROCESS FOR BIOREMEDIATION OF CONTAMINATED SOIL OR GROUNDWATER**
VERFAHREN ZUR BIOLOGISCHEN SANIERUNG VON KONTAMINIERTEM BODEN ODER GRUNDWASSER
PROCEDE DE REDRESSEMENT BIOLOGIQUE DE SOL OU D'EAUX SOUTERRAINES CONTAMINES

(30) Priority: 26.03.1993 US 37215
(43) Date of publication of application: 10.01.1996
(73) Proprietor: SBP TECHNOLOGIES, INC., New Haven, CT 06150 (US); UNITED STATES ENVIRONMENTAL PROTECTION AGENCY, Washington, D.C. 20460 (US)
(72) Inventor: MUELLER, James, G., Gulf Breeze, FL 32561 (US); PRITCHARD, Hap, P., Gulf Breeze, FL 32561 (US); LANTZ, Suzanne, The Woodlands, TX 77380 (US)
(74) Representative: Perry, Robert Edward
(86) International application number: US9403334
(87) International publication number: WO9422605

(56) References cited:
- EP-A- 0 404 466
- US-A- 3 899 376
- AMERICAN SOCIETY FOR MICROBIOLOGY ABSTRACTS OF THE ANNUAL MEETING , MAY 13-17,1990 ANAHEIM page 300 , abstract Q-70 cited in the application
- APPLIED AND ENVIRONMENTAL MICROBIOLOGY, vol.57, no.5, May 1991 pages 1277 - 1285 J. MUELLER 'BIODEGRADATION OF CREOSOTE AND PENTACHLOROPHENOL IN CONTAMINATED GROUNDWATER : CHEMICAL AND BIOLOGICAL ASSESMENT' cited in the application

## Description

### Cross-Reference to a Related Application

This is a continuation-in-part of co-pending application Serial No. 07/913,274, filed July 14, 1992.

### Background of the Invention

A wide variety of bioreactor technologies has been developed for the treatment of solid, liquid, and gaseous matrices contaminated with myriad organic chemicals (Grady, C.P.L., Jr. [1989] In *Biotechnology Application in Hazardous Waste Treatment*, *Lewandowski*, G*., et al*., Eds., Engineering Foundation: New York, pp. 81-93). Bioreactors are, in general, advantageous as compared to other bioremediation approaches (e.g., composting, land farming, and *in situ* treatment) because the physicochemical variables (e.g., pH, nutrient concentrations, biomass, oxygen-transfer rate, contaminant loading rate, etc.) of a bioreactor can be precisely controlled. Conditions in a bioreactor can be optimized for the desired microbial activities in order to maximize performance. Effective mixing alleviates certain mass-transfer problems, and surfactants, detergents, or solubilizing agents can be added to increase the aqueous solubility of hydrophobic contaminants, thereby enhancing the bioavailability of target chemicals. For these same reasons, bioreactor inoculation is often a viable technique to rapidly establish active biomass and enhance the desired biological activity. Together, these factors act to maximize the kinetics of biodegradation, hence enhancing the bioremediation processes.

Bioreactor strategies have been applied successfully for the bioremediation of organic contaminants. For example, biofiltration has been used extensively to remove volatile organic compounds from air emissions (Kampbell, D.H., J.T. Wilson, H.W. Read, T.T. Stocksdale [1987] *J. Air Pollut. Control Assoc.* 37:1236-1240; Leson, G., A.M. Winer [1991] *J. Air. Waste Manage. Assoc.* 41:1045-1054), vapor-phase bioreactors have treated chlorinated aliphatics in the gaseous state (Folsom, B.R., P.J. Chapman [1991] *J. Appl. Environ. Microbiol.* 57:1602-1608; Friday, D.D., R.J. Portier [1991] *Environ. Prog.* 10:30-39), and fixed film bioreactors have been used for the treatment of kraft bleaching effluent containing a variety of chlorinated aromatic chemicals (Salkinoja-Salonen, M.S., R. Hakulinen. R. Valo, Apajalahti [1983] *J. Water Sci. Technol.* 15:309-319) and for petroleum refinery effluent (Hamoda, M.F., A.A Al-Haddad [1987] *J. Inst. Water Environ. Manage.* 1:239-246).

Attempts to apply bioreactor technologies to the treatment of soil and water contaminated with the chemicals found in organic wood preservatives have often proven unsuccessful (Dooley-Dana, M., M. Findley [1989] Abstracts, American Society for Microbiology, Annual Meeting, May 14-18, 1989, New Orleans, LA, p. 363; Mahaffey, W., R. Sanford, A. Strehler, A. Bourquin, *Id.* at 338; Mueller, J.G., S.E. Lantz, B.O. Blattmann, P. Chapman [1991] *J. Environ. Sci. Technol.* 25:1055-1061; Mueller, J.G., D.P. Middaugh, S.E. Lantz, P.J. Chapman [1991] *J. Appl. Environ. Microbiol.* 57:1277-1285; van der Hoek, J.P., L.G. Urlings, C.M. Grobben [1989] *Environ. Technol. Lett.* 10:185-194; Webb, O.F., T.L. Phelps, P.R. Bienkowski, P. DiGrazia, G.D. Reed, B. Applegate, D.C. White, G.S. Sayler [1991] *J. Appl. Biochem. Biotechnol.* 28/29:5-19). One challenge which remains in the field of bioremediation is the limited ability to efficiently biodegrade high molecular weight polycyclic (chemicals containing four or more fused rings) aromatic hydrocarbons (HMW PAHs) present in contaminated soils and waters. Creosote is a commonly encountered wood preservative containing HMW PAHs which have previously been difficult to biodegrade. This limited success in degrading HMW PAHs is due to structural aspects of these chemicals and their strong tendency to partition to biomass, sludge, and bioreactor residues (Petrasek, A.C., I.J. Kugelman, B.M. Austern, T.A. Pressly, L.A. Winslow, R.H. Wise [1983] *Water Pollut. Control Fed.* 55:1286-1296; Jafvert, C.T., J.K. Heath [1991] *Environ. Sci. Technol.* 25:1031-1038; Jafvert, C.T. [1991] *Environ. Sci. Technol.* 25:1039-1045).

Previously, we described the isolation and characterization of microorganisms capable of utilizing HMW PAHs and other persistent creosote constituents as sole sources of carbon and energy for growth (Mueller, J.G., P.J. Chapman, P.H. Pritchard [1989] *Appl. Environ. Microbiol.* 55:3085-3090; Mueller, J.G., P.J. Chapman, B.O. Blattman, P.H. Pritchard [1990] *Appl. Environ. Microbiol.* 56:1079-1086). See also United States Patent No. 5,132,224. Additionally, an axenic culture of *Pseudomonas* sp. strain SR3 was shown to mineralize PCP when supplied as a sole carbon source in liquid medium (Resnick, S.M., P.J. Chapman [1990] *Abstracts*, American Society for Microbiology, Annual Meeting, May 13-17, 1990, Anaheim, CA, p. 300). A *Pseudomonas paucimobilis* strain known as EPA-505 has been described as capable of degrading high molecular weight PAHs and PCP. U.S. Patent No. 5,132,224. However, the viability of these organisms can be inhibited by the PAHs of lower molecular weight and heterocyclic compounds found on creosote, as well as by certain phenolic compounds. Therefore, a need exists for a strategy to remove HMW PAHs and PCP by bioremediation without affecting the viability of the organisms used in the bioremediation process.

### Brief Summary of the Invention

A two-stage, sequential inoculation bioreactor strategy for the bioremediation of contaminated soil or groundwater is described. More specifically, the subject invention concerns a sequential inoculation process employing microorganisms to enhance the effectiveness of bioremediation technologies for the treatment of creosote- and PCP-contaminated soil or groundwater. The strategy can be used for soil or groundwater contaminated with compounds found in creosote, especially high molecular weight polycyclic aromatic hydrocarbons (HMW PAHs) and pentachlorophenol (PCP).

The two-stage strategy of the subject invention comprises a first step of treatment of the contaminated soil or groundwater in a bioreactor inoculated with a culture of microorganisms known to reduce contamination of lower molecular weight PAHs and certain heterocyclic and phenolic compounds, and a second step, treating the soil or groundwater treated in the first step in a bioreactor inoculated with a different microorganism which biodegrades HMW PAHs and PCP. Preferably, the second step occurs after biodegradation by the microorganism used in the first step has occurred. Bioreactor performance was assessed according to chemical analyses of system influent, effluent, and bioreactor residues, a chemical mass balance evaluation, and comparative biological toxicity and teratogenicity measurements which are known in the art. The concentration of creosote constituents was reduced more than 99%. The cumulative concentration of carcinogenic polycyclic aromatic hydrocarbons was also reduced. Moreover, the toxicity and teratogenicity of the bioreactor effluent were significantly reduced.

### Brief Description of the Drawings

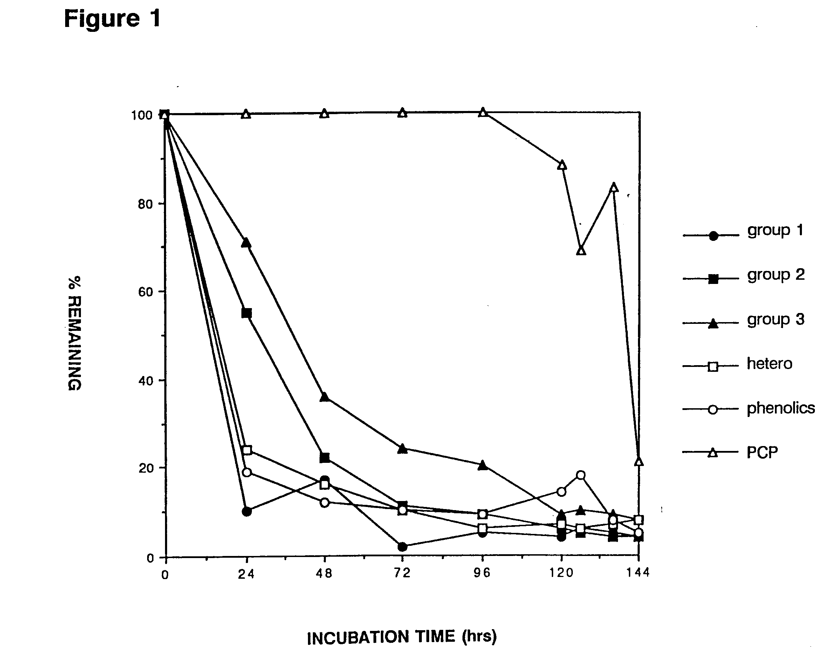

**Figure 1** shows activity of inoculant cells of specially selected microorganisms toward creosote and PCP present in groundwater medium contained in bench-scale bioreactors. Removal of 40 monitored creosote constituents and PCP following sequential inoculation under batch incubation conditions. Key: (●) group 1; (■) group 2; (▲) group 3; (□) heterocyclics; (○) phenolics; (△) PCP.

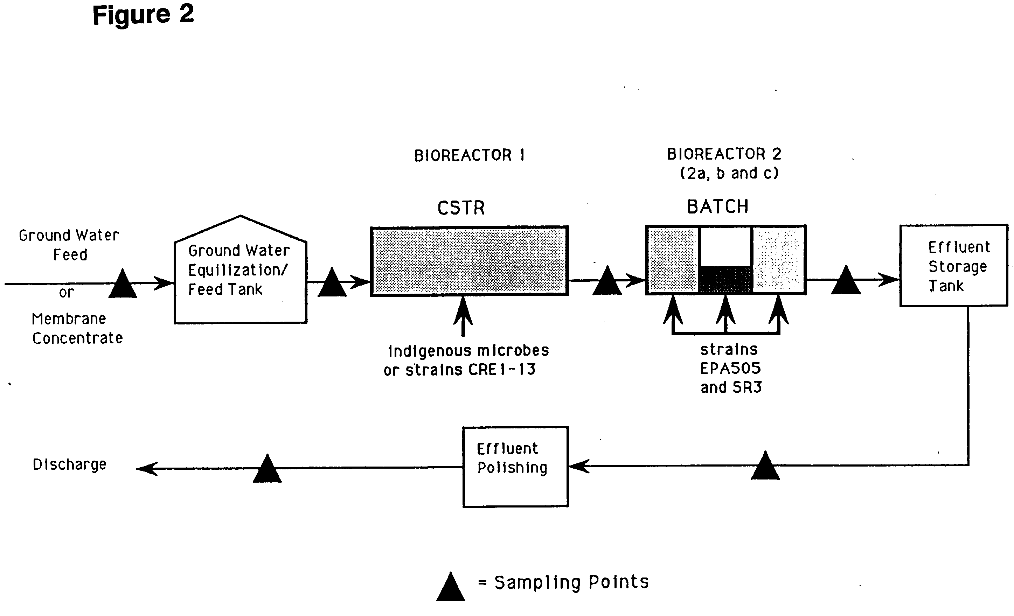

**Figure 2** is a schematic of the two-stage, continuous-flow, sequential inoculation bioreactor system at the pilot scale: (▲) sampling points.

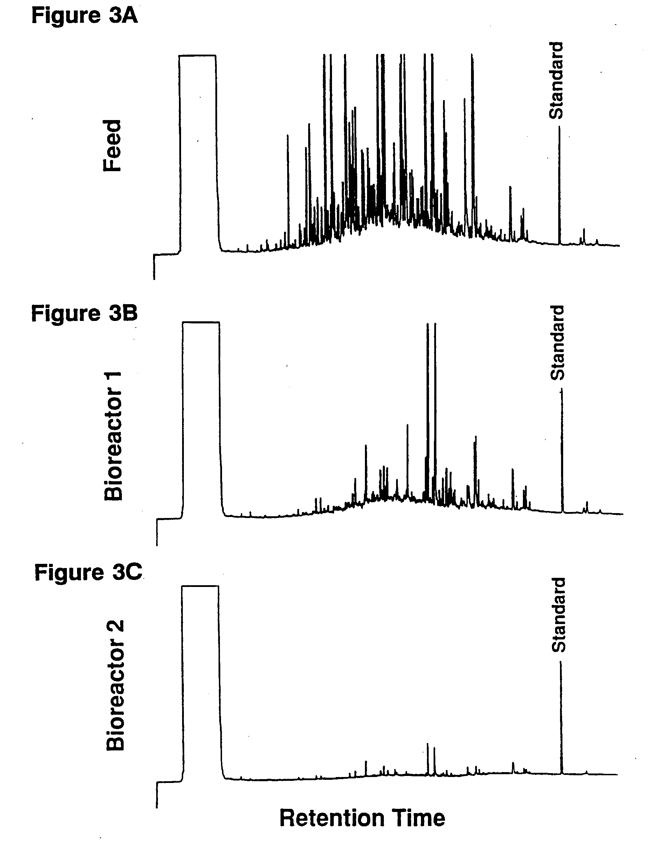

**Figures 3A-3C** show changes in chemical composition of groundwater during pilot-scale bioremediation. Figure 3A shows a gas chromatogram of basic extracts of groundwater bioreactor feed. Figure 3B shows effluent from FBR1 inoculated with strains CRE1-13. Figure 3C shows the results after FBR2 was inoculated with strains EPA-505 and SR3.

### Detailed Disclosure of the Invention

The subject invention concerns a novel process for decontamination of polluted soils and groundwater. The process is particularly well suited for the biodegradation of wood-preservative chemicals such as high molecular weight polycyclic aromatic hydrocarbons (HMW PAHs), constituents of creosote, and pentachlorophenol (PCP). High molecular weight PAHs are well known in the art. Examples of such compounds include benz[*a*]anthracene, benzo[*a*]pyrene, benzo[*b*]fluoranthene/benzo[*k*]fluoranthene, benzo[*b*]fluorene, chrysene, fluoranthene, and pyrene.

The process comprises a two-stage, sequential inoculation strategy for a bioreactor used in bioremediation of contaminated soil or groundwater. The first step of the novel process comprises treating a contaminated sample in a bioreactor inoculated with a culture of microorganisms known to biodegrade certain organic chemicals, but which can be generally ineffective for biodegradation of HMW PAHs and PCP. For example, the known and previously described microorganism strains CRE1-13 can be used for the first step.

The second step comprises treating the sample treated in step 1 in the bioreactor inoculated with a second strain of microorganism which is known to biodegrade the HMW PAHs and PCP which can remain even after treatment with the microorganisms used in step 1. Preferably, the second step is performed after biodegradation has been effected by the organism employed in the first step. Microorganisms which can be used in the second step include, but are not limited to, *Pseudomonas paucimobilis* strain EPA-505 and *Pseudomonas* sp. strain SR3. Most preferably, *P. paucimobilis* strain 505sc (NRRL B-18512) can be used as the inoculum for step two of the subject process. This organism has been deposited in a recognized repository as described in U.S. Patent No. 5,132,224.

### Materials and Methods

Inoculum preparation and viability. Previously, we described the isolation of seven bacterial strains, designated CRE1-7 (originally described as strains FAE1-7), from creosote-contaminated soil at the American Creosote Works (ACW) Superfund site, Pensacola, FL (Mueller *et al.* [1989], *supra*). Another member of this community, *Pseudomonas* *paucimobilis* strain EPA-505, was later described for its ability to mineralize fluoranthene as a sole carbon source (Mueller *et al.* [1990], *supra*). Similarly, strains CRE8-13 were isolated from ACW soil enrichments with fractions of specification creosote 450 containing acidic (e.g., phenolic) or basic (e.g., heterocyclic) creosote constituents. *Pseudomonas* sp. strain SR3 was isolated from a PCP-contaminated soil from northwest Florida for its ability to utilize PCP as a sole carbon source (Resnick *et al*., supra). These 15 isolates are particularly useful according to the subject invention.

To generate inocula for bench-scale operations, small-scale fermentations were performed with each of the 15 individual bacterial cultures in Luria-Bertani broth. Once cells reached the late log phase (OD₆₀₀ₙₘ *ca.* 1.0), they were concentrated (10,000 rpm for 10 minutes at room temperature), washed once in sterile phosphate buffer (pH 7.0), and then suspended in phosphate buffer plus 5% DMSO or 20% glycerol. For PCP-degrading strain SR3, cells were grown with glucose and yeast extract using a two-stage PCP induction process as described by Resnick and Chapman (Resnick, S.M., P.J. Chapman [submitted] "Isolation and characterization of a pentachlorophenol-degrading *Pseudomonas* sp.," *Biodegradation*). On average, 10 L of cells were concentrated to a final volume of 50 mL, resulting in a final cell density between 5 x 10¹¹ and 1 x 10¹² cells/mL. Cell concentrates were stored at ―70RC until used.

Prior to use in laboratory and field studies, the percent recovery of viable cells of each strain from inoculant preparations was determined by direct plate counting on nutrient agar (Difco). Additionally, the activity of the individual strains and the 13-member community (reconstituted from inoculant preparations) toward creosote and PCP present in groundwater recovered from the ACW site was evaluated. These studies were performed in two 1.2-L Biostat M bioreactors (see following section) operated in the batch mode. Each bioreactor was filled with 1.0 L of mineral salts (MSII) medium (Mueller *et al*. [1989], *supra*) containing 1000 µL of a filter-sterilized creosote stock solution (7.0 mL of site creosote-PCP oil plus 3.0 mL of DMSO) yielding an ACW groundwater medium containing an initial concentration of 700 mg of creosote-PCP oil/L plus 300 mg of DMSO/L. The use of solubilizing agents or surfactants to enhance the aqueous solubility of hydrophobic chemicals has been well documented (Jafvert *et al.* [1991], *supra*; Jafvert [1991], *supra*; Edwards, D.A., R.G. Luthy, Z. Liu [1991] *Z. Environ. Sci. Technol.* 25:127-133; *A Guide to the Properties and Uses of Detergents in Biology and Biochemistry*, Neugubauer, J., Ed., Calbiochem Corp., La Jolla, CA, 1990).

Initially, the bioreactor was inoculated with strains CRE1-13 at a density of 1 x 10⁸ cells/mL for each strain. The bioreactor was operated in the batch mode for 6 days. On days 4, 5, and 6, strains SR3 and EPA-505 were added to the bioreactor at a concentration of 1 x 10⁶ cells/mL. Duplicate 5.0 mL samples of bioreactor contents were removed daily for chemical analyses. Previous studios showed limited biodegradation of HMW PAHs (*ca.* <50%) and PCP (<5%) without the inoculation of ACW groundwater under shake flask and identical bioreactor conditions (Mueller and Middaugh [1991], *supra*).

Sequential inoculation, continuous-flow bioreactor: bench-scale studies. The first (BR1) of two 1.2-L Biostat M bioreactors (B. Braun Biotech, Allentown, PA), connected in series, was filled with 1.0 L of fresh MSII medium plus 0.03% Triton X-100 (Sigma Chemical Co.) and 0.5 mL of creosote-PCP oil (recovered from the ACW site aquifer as a dense nonaqueous-phase oil). This yielded an average total concentration of 149.4 mg/L of the 40 monitored creosote constituents plus 9.9 mg of PCP/L.

For initial inoculation, concentrated cells (1.0 mL containing *ca.* 5 x 10¹¹ cells) of strains CRE1-13 were removed from storage at ―70RC, thawed at room temperature, and then added to BR1 for an initial inoculum density of *ca.* 1 x 10⁷ cells of each strain/mL. The reactor was operated for 24 hours in the batch mode to allow for acclimation of added biomass. Operational parameters were controlled electronically (pH 7.2, dissolved oxygen [DO] 90% of saturation, 28.5RC, 350 rpm) and monitored daily as previously described (Mueller and Lantz *et al*. [1991], *supra*).

After this acclimation period the bioreactor contents were again spiked with 0.5 mL of the ACW creosote-PCP oil and the system was converted to a flow-through mode of operation. Feed solution was introduced into BR1 at a rate of 0.7 mL/minute (24-h hydraulic retention time). Feed solutions were prepared daily by adding 1.0 mL of creosote-PCP oil and 0.3 mL of Triton X-100 to 1.0 L of MSII medium in a Teflon bottle, resulting in an average total concentration of 273.0 mg/L for 40 monitored creosote constituents plus 16.9 mg of PCP/L. These solutions were mixed constantly with a magnetic stir bar, and feed was moved through Teflon and Viton tubing with a peristaltic pump. A level control probe was used to maintain the volume of BR1 at 1.0 L. This probe was connected to a peristaltic pump which, once activated, intermittently (5-s pulsed pumping) transferred material from BR1 to the second bioreactor (BR2) through Teflon and Viton tubing. As effluent from BR1 was transferred, a cell suspension (*ca*. 1 x 10⁷ cells/mL) of EPA-505 and SR3 (see inoculum preparation section) was added to BR2 at a rate of 0.3 mL/minute. The volume of reactor contents in BR2 was maintained at 1.0 L by a second-level control probe connected to another peristaltic pump. Effluent from BR2 was transferred into a 15-L holding vessel.

Continuous-flow operations with daily additions of EPA-505 and SR3 to BR2 were performed for 32 days. Duplicate 5.0-mL samples were taken daily from both bioreactors and analyzed. Feed solutions were also analyzed daily. Sequential inoculation continuous flow strategies can also be used in larger scale projects, including pilot scale and in the field.

Following are examples which illustrate procedures, including the best mode, for practicing the invention. These examples should not be construed as limiting. All percentages are by weight and all solvent mixture proportions are by volume unless otherwise noted.

### Example 1 ― Inoculum Viability

When inoculant cells were recovered from ―70RC storage and added to 1.2-L bench-scale bioreactors containing medium prepared with creosote- and PCP-contaminated groundwater from the ACW site, the reconstituted bacterial community exhibited rapid and significant biodegradation of all monitored chemicals (Figure 1). Initial inoculation with strains CRE1-13 resulted in the rapid, but incomplete, biodegradation of PAHs and heterocyclic and phenolic constituents of creosote. After 96-hour batch incubation, the addition of strain SR3 resulted in rapid degradation of PCP. When strain SR3 was not added to the reactor, PCP was not degraded.

The sequential addition of strain EPA-505 appeared to further reduce the concentration of HMW PAHs. Previous studies using soil slurries and/or the microflora indigenous to the ACW groundwater showed limited activity toward HMW PAHs and PCP (Mueller and Lantz *et al*. [1991], *supra*; Mueller and Middaugh *et al*. [1991], *supra*; van der Hook *et al*., supra; Webb *et al*., *supra*, Petrasek *et al*., *supra*; Jafvert *et al*., *supra*). On the basis of those data, it was concluded that the inocula prepared for field operations provided viable and active cells that could rapidly degrade PCP and 40 monitored creosote constituents present in groundwater at the ACW site.

### Example 2 ― Bench-Scale Bioreactor Studies

After 32 days of continuous-flow operation, mass balance evaluation of analytical chemistry data showed that a majority of the monitored creosote constituents were biodegraded in the first bioreactor (BR1), but most of the PCP (88%) was found in the effluent of BR1. However, the addition of strain SR3 to BR2 resulted in the subsequent biodegradation of 77% of the PCP. Between the two bioreactors, biodegradation for PCP and group 1-3 PAHs and heterocyclic phenolic components of creosote was determined to be 71.9, 98.0, 96.2, 89.4, 94.1, and 96.9%, respectively. Previous studies with indigenous soil and groundwater microorganisms incubated under similar conditions showed little activity toward PCP and HMW PAHs (Mueller and Lantz *et al*. [1991], *supra*; Mueller and Middaugh *et al.* [1991], *supra*). Hence, at the bench-scale level, the sequential addition of bacteria having the ability to degrade these persistent chemicals proved effective in enhancing the desired biodegradation processes.

### Example 3 ― Pilot-Scale Bioreactor Studies

The pilot-scale bioreactor system (see Figure 2) was effective in treating ACW groundwater in a two-step process. When gas chromatograms of organic extracts of the original feed solution (Figure 3A) were compared with the contents of the first bioreactor (FBR1) recovered after 8 days of continuous-flow operation (Figure 3B), it was apparent that the microorganisms present in this bioreactor (strains CRE1-13) were effective in the degradation of many creosote constituents (chromatograms made with the same attenuation and sample dilutions using dotriacontane [C₃₂] as the chemical standard). However, the pattern of biodegradation showed a preference for the lower molecular weight components (with shorter retention times). Thus, the higher molecular weight constituents (longer retention times) were the main contaminants introduced to FBR2 (the tall twin peaks about middistance on the horizontal axis represent fluoranthene and pyrene, respectively). With the addition of SR3 and EPA-505, removal of >98% of all monitored creosote constituents and approximately 70% of the PCP present in groundwater feed occurred (Figure 3C).

These results compare favorably to those obtained from preliminary bioreactor studies using several sources of microorganisms (activated sludge from a wastewater treatment plant, municipal wastewater treatment sludge, soil slurry from the ACW site) under a variety of operating scenarios (batch bioreactor operation, single-stage inoculation). As modeled by similar studies at the bench scale, the two-stage, continuous-flow, sequential inoculation system using specially selected microorganisms was at least 50% more efficient in removing HMW PAHs and PCP at the pilot scale.

These data demonstrate that bioreactor technologies employing a two-stage sequential inoculation strategy can contribute to the effective treatment of groundwater contaminated with HMW PAHs and PCP, which are typically found at wood treatment facilities and similarly contaminated sites. The two-stage, sequential use of specially selected microorganisms in bioreactor systems resulted in significant biodegradation of persistent contaminants. Data generated at bench-scale modeled accurately the results obtained during pilot-scale studies.

It should be understood that the examples and embodiments described herein are for illustrative purposes only and that various modifications or changes in light thereof will be suggested to persons skilled in the art and are to be included within the scope of the appended claims.

## Claims

1. A process for remediating contaminated soil or groundwater wherein said process comprises the steps
(a) treating said soil or groundwater in a bioreactor inoculated with a microorganism which biodegrades lower molecular weight polycyclic aromatic hydrocarbons, heterocyclic organic compounds and phenolics found in creosote; and
(b) treating said soil or groundwater from step 1 with a different microorganism which biodegrades high molecular weight polycyclic aromatic hydrocarbons or pentachlorophenol.

2. The process, according to claim 1, wherein the microorganism of step (b) is selected from the group consisting of *Pseudomonas paucimobilis* strain EPA-505 and *Pseudomonas* sp. strain SR3.

3. The process, according to claim 2, wherein said microorganism is *Pseudomonas paucimobilis* strain EPA-505.

4. The process, according to claim 3, wherein said microorganism is *Pseudomonas paucimobilis* strain EPA-505sc (NRRL B-18512).

5. The process, according to claim 1, wherein said high molecular weight polycyclic aromatic hydrocarbon is selected from the group consisting of benz[*a*]anthracene, benzo[*a*]pyrene, benzo[*b*]fluoranthene/benzo[*k*]fluoranthene, benzo[*b*]fluorene, chrysene, fluoranthene, and pyrene.

## Patentansprüche

1. Verfahren zur Sanierung von verunreinigtem Boden oder Grundwasser, worin das Verfahren die folgenden Schritte umfaßt:
(a) Behandlung des Bodens oder Grundwassers in einem mit einem Mikroorganismus, welcher niedermolekulare polycyclische aromatische Kohlenwasserstoffe, heterocyclische organische Verbindungen und in Kreosot zu findende phenolische Substanzen biologisch abbaut, beimpften Bioreaktor; und
(b) Behandlung des Bodens oder Grundwassers aus Schritt 1 mit einem anderen Mikroorganismus, welcher hochmolekulare polycyclische aromatische Kohlenwasserstoffe oder Pentachlorphenol biologisch abbaut.

2. Verfahren nach Anspruch 1, worin der Mikroorganismus von Schritt (b) aus der Gruppe bestehend aus *Pseudomonas paucimobilis* Stamm EPA-505 und *Pzeudomonas* sp. Stamm SR3 ausgewählt ist.

3. Verfahren nach Anspruch 2, worin der Mikroorganismus *Pseudomonas paucimobilis* Stamm EPA-505 ist.

4. Verfahren nach Anspruch 3, worin der Mikroorganismus *Pseudomonas paucimobilis* Stamm EPA-505sc (NRRL B-18512) ist.

5. Verfahren nach Anspruch 1, worin der hochmolekulare polycyclische aromatische Kohlenwasserstoff aus der Gruppe bestehend aus Benz[*a*]anthracen, Benzo[*a*]pyren, Benzo[*b*]fluoranthen/Benzo[*k*]fluoranthen, Benzo[*b*]fluoren, Chrysen, Fluoranthen und Pyren ausgewählt ist.

## Revendications

1. Procédé d'assainissement d'un sol ou d'eau souterraine contaminés, dans lequel ledit procédé comprend les étapes consistant :
(a) traiter ledit sol ou eau souterraine dans un bioréacteur auquel on a inoculé un microorganisme qui biodégrade des hydrocarbures aromatiques polycycliques de faible poids moléculaire, des composés organiques hétérocycliques et des composés phénoliques que l'on trouve dans la créosote; et
(b) traiter ledit sol ou eau souterraine provenant de l'étape 1 avec un microorganisme différent qui biodégrade le pentachlorophénol ou des hydrocarbures aromatiques polycycliques de haut poids moléculaire.

2. Procédé selon la revendication 1, dans lequel le microorganisme de l'étape (b) est choisi dans le groupe formé de *Pseudomonas paucimobilis* souche EPA-505 et de *Pseudomonas* sp. souche SR3.

3. Procédé selon la revendication 2, dans lequel ledit microorganisme est *Pseudomonas paucimobilis* souche EPA-505.

4. Procédé selon la revendication 3, dans lequel ledit microorganisme est *Pseudomonas paucimobilis* souche EPA-505sc (NRRL B-18512).

5. Procédé selon la revendication 1, dans lequel ledit hydrocarbure aromatique polycyclique de haut poids moléculaire est choisi dans le groupe formé de benz[*a*]anthracène, benzo[*a*]pyrène, benzo[*b*]fluoranthène/benzo[*k*]fluoranthène, benzo[*b*]fluorène, chrysène, fluoranthène, et pyrène.
